# EUROPÄISCHE PATENTSCHRIFT

(11) **EP 4 158 290 B1**
(45) Veröffentlichungstag und Bekanntmachung des Hinweises auf die Patenterteilung: **04.06.2025**
(21) Anmeldenummer: 21722164.7
(22) Anmeldetag: 23.04.2021
(51) Int. Cl.: G01F 23/284, G01F 25/00, G01S 7/40, G01F 25/20, G01S 13/87, G01S 13/88

(54) **FÜLLSTANDSMESSGERÄT**
FILL LEVEL MEASUREMENT DEVICE
DISPOSITIF DE MESURE DE NIVEAU DE REMPLISSAGE

(30) Priorität: 26.05.2020 DE 102020114108
(43) Veröffentlichungstag der Anmeldung: 05.04.2023
(73) Patentinhaber: Endress+Hauser SE+Co. KG, 79689 Maulburg (DE)
(72) Erfinder: MICHALSKI, Bernhard, 79689 Maulburg (DE)
(74) Vertreter: Endress + Hauser Group Services (Deutschland) AG+Co. KG
(86) Internationale Anmeldenummer: PCT/EP2021/060726
(87) Internationale Veröffentlichungsnummer: WO 2021/239348

(56) Entgegenhaltungen:
- WO-A1-2009/142595
- DE-A1- 10 037 715
- US-B1- 6 414 625

## Beschreibung

Die Erfindung betrifft ein Füllstandsmessgerät, dessen Funktionsfähigkeit überprüfbar ist.

In der Automatisierungstechnik, insbesondere zur Prozessautomatisierung werden vielfach Feldgeräte eingesetzt, die zur Erfassung diverser Messgrößen dienen. Bei der zu bestimmenden Messgröße kann es sich beispielsweise um einen Füllstand, einen Durchfluss, einen Druck, die Temperatur, den pH-Wert, das Redoxpotential, eine Leitfähigkeit oder den Dielektrizitätswert eines Mediums in einer Prozessanlage handeln. Zur Erfassung der entsprechenden Messwerte umfassen die Feldgeräte jeweils geeignete Sensoren bzw. basieren auf geeigneten Messprinzipien. Eine Vielzahl verschiedener Feldgeräte-Typen wird von der Firmen-Gruppe Endress + Hauser hergestellt und vertrieben.

Zur Füllstandsmessung von Füllgütern in Behältern haben sich Radar-basierte Messverfahren etabliert, da sie robust und wartungsarm sind. Ein zentraler Vorteil Radarbasierter Messverfahren besteht in der Fähigkeit, den Füllstand quasi kontinuierlich messen zu können. Im Kontext dieser Patentanmeldung beziehen sich die Begriffe "*Radar*" bzw. "*Hochfrequenz*" auf Radar-Signale mit Frequenzen zwischen 0.03 GHz und 300 GHz. Übliche Frequenzbänder, bei denen Füllstandsmessung durchgeführt wird, liegen bei 2 GHz, 26 GHz, 79 GHz, oder 120 GHz. Die beiden gängigen Messprinzipien bilden hierbei das Pulslaufzeit-Prinzip (auch unter dem Begriff "*Pulsradar*" bekannt) sowie das FMCW-Prinzip *("Frequency Modulated Continuous* Wave*")*.

Das Dokument DE 100 37 715 A1 zeigt ein Radar-basiertes Füllstandsmessgerät aus der Stand der Technik.

Im Falle des Pulslaufzeit-Verfahrens werden mittels einer Hochfrequenz-Quelle Hochfrequenz-Signale pulsweise mit einer definierten Taktrate in Richtung des Füllguts ausgesandt. Darauf basierend wird die Laufzeit bis zum Eintreffen der an der Füllgut-Oberfläche reflektierten Hochfrequenz-Pulse gemessen, indem ein entsprechendes Empfangs-Signal empfangen wird. Damit anhand des hochfrequenten Empfangs-Signals die Laufzeit bzw. der Abstand zum Füllgut schaltungstechnisch einfacher ermittelt werden kann, wird anhand der Empfangs-Signale wiederum ein zeitgedehntes Auswertungs-Signal erstellt. Dabei wird das Auswertungs-Signal aufgrund der hohen Pulsfrequenz durch Unterabtastung des Empfangs-Signals erstellt. Die Unterabtastung erfolgt in einem Empfänger durch Samplen der empfangenen Hochfrequenz-Pulse mit entsprechenden erzeugten Abtastpulsen, wobei deren Abtastrate im Promille-Bereich von der Taktrate der ausgesendeten Hochfrequenz-Pulse abweicht. Damit die entsprechende Soll-Abweichung zwischen der Abtastrate und der Taktrate eingehalten wird, wird die Abtastrate durch einen Regelkreis in Abhängigkeit der gemessenen Ist-Abweichung nachgeregelt. Insgesamt bildet das Auswertungs-Signal somit die Signalamplitude des Empfangs-Signals bzw. der reflektierten Hochfrequenz-Pulse zeitgedehnt ab. Hierbei spiegelt das Auswertungs-Signal die Signalamplitude des Empfangs-Signals in Abhängigkeit des Messgeräte-Abstandes zum Füllgut wider.

Im Gegensatz zum Pulslaufzeit-Verfahren beruht FMCW darauf, dass die Hochfrequenz-Quelle das Hochfrequenz-Signal kontinuierlich, jedoch mit modulierter Frequenz aussendet. Dabei liegt die Frequenz des auszusendenden Hochfrequenz- Signals in einem festgelegten Frequenzband im Bereich einer standarisierten Mittenfrequenz. Die zeitliche Änderung der Frequenz ist bei FMCW standardmäßig linear und weist eine Sägezahn- beziehungsweise Dreiecks-Form auf. Eine Sinus-förmige Änderung kann prinzipiell jedoch auch umgesetzt werden. Dabei wird der Abstand zum Füllgut bzw. der Füllstand bei Implementierung des FMCW-Verfahrens auf Basis der instantanen Frequenzdifferenz zwischen dem aktuellen Empfangs-Signal und dem momentan ausgesendeten Hochfrequenz-Signal bestimmt, indem der Empfänger durch Mischen der entsprechenden elektrischen HF-Signale das wiederum zeitgedehnte Auswertungs-Signal generiert. Dabei kann der Abstand anhand der Frequenz des Auswertungs-Signals ermittelt werden, da sich die Frequenz des Auswertungs-Signals prinzipbedingt proportional zum Abstand ändert.

Auf Basis des Pulslaufzeit-Verfahrens sowie auf Basis des FMCW-Verfahrens können Füllstandsmessgeräte mit vergleichsweise geringem schaltungstechnischem Aufwand und einer hohen Füllstands-Auflösung im Sub-Millimeterbereich realisiert werden. Näher beschrieben wird werden Radar-basierte Messprinzipien beispielsweise in "Radar Level Detection, Peter Devine, 2000*".*

Neben frei abstrahlender Radar-Messung, bei der die Hochfrequenz-Signale über eine Antenne ausgesendet bzw. empfangen werden, existiert zudem die Variante des geführten Radars. Hierbei dient anstelle der Antenne als Übertragungs-Einheit eine elektrisch leitfähige Messsonde (bspw. ein Koaxial-Kabel oder einen Metallstab), die zur Führung der Hochfrequenz-Signale in den Behälter hinuntergelassen ist. Analog zu frei abstrahlendem Radar wird das Hochfrequenz-Signal in der Messsonde auf Höhe der Füllgutoberfläche reflektiert und entlang der Messsonde gen Füllstandsmessgerät zurückgeleitet. Bekannt ist diese Variante der Radar-basierten Füllstandsmessung auch unter dem Begriff "*TDR*" ("*Time Domain Reflectometry*"). Vorteilhaft an dieser Variante ist, dass aufgrund der geführten Signalabstrahlung weniger Leistung zum Betrieb des Füllstandsmessgerätes erforderlich ist. Analog zu frei abstrahlenden Radargeräten nach dem Pulslaufzeit- oder FMCW-Prinzip wird auch bei Implementierung des TDR-Prinzips ein Auswertungs-Signal zur Ermittlung des Füllstandes erstellt.

Unabhängig vom implementierten Messprinzip wird für sicherheitsrelevante Füllstandsmessgeräte gefordert, die verschiedenen funktionalen Einheiten des Gerätes so überwachen zu können, dass eine etwaige Fehlfunktion jeder Einheit mit ausreichender Sicherheit detektiert werden kann. Definiert sind entsprechende Sicherheitsvorgaben beispielswiese als "*Safety Integrity Level x (SILx)"* gemäß der Normenreihe IEC61508. Sofern das Füllstandsmessgerät solche Sicherheitsvorgaben nicht oder nur teilweise einhalten kann, gilt es als unsicher und darf, wenn überhaupt, nur mit entsprechend kürzeren Prüfzyklen betrieben werden. Solche Prüfzyklen sind im laufenden Produktionsprozess jedoch aufwändig und dementsprechend unerwünscht. Bezüglich der Hochfrequenz-Einheit, welche die Hochfrequenz-Quelle und den Empfänger umfasst, ist die Überprüfbarkeit der korrekten Funktion jedoch schwierig, weil Ausfälle im Analogbereich oft nicht eindeutig als Defekt erkannt werden können. Dies betrifft beispielsweise schleichende Veränderungen, die sich auf die Messgenauigkeit auswirken und somit sicherheitsrelevant sind.

Der Erfindung liegt daher die Aufgabe zugrunde, ein Füllstandsmessgerät bereitzustellen, welches die Funktionsfähigkeit seiner Hochfrequenz-Einheit überprüfen kann.

Die Erfindung wird durch den Gegenstand der unabhängigen Ansprüche definiert.

Die Erfindung basiert also darauf, alle essentiellen Komponenten der Hochfrequenz-Einheit redundant auszulegen, wobei die Funktionsfähigkeit der Hochfrequenz-Einheit durch Umschalten (also Ausschalten der bis dato aktiven Komponente und Aktivieren der korrespondierenden, bis dato nicht aktiven Komponente) von zumindest einer der redundanten Komponenten geprüft wird. Dabei erfolgt die Prüfung, indem das Auswertungs-Signal auf Änderungen im Auswertungs-Signal, die durch das Umschalten resultieren, untersucht wird. Dementsprechend kann die Diagnose-Einheit des Füllstandsmessgerätes beispielsweise je nach Einsatzgebiet ein entsprechendes Fehlersignal generieren, sofern die Diagnose-Einheit die Hochfrequenz-Einheit als funktionsuntüchtig einstuft. Alternativ oder zusätzlich ist es auch denkbar, dass die Diagnose-Einheit ein entsprechendes "OK-Signal" erzeugt, solange die Hochfrequenz-Einheit als funktionstüchtig eingestuft wird.

Unter dem Begriff "*Einheit*" wird im Rahmen der Erfindung prinzipiell jede elektronische Schaltung verstanden, die für den angedachten Einsatzzweck geeignet ausgelegt ist. Es kann sich also je nach Anforderung um eine Analogschaltung zur Erzeugung bzw. Verarbeitung entsprechender analoger Signale handeln. Es kann sich jedoch auch um eine Digitalschaltung wie ein FPGA oder ein Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Messgerätes im Sinne der Erfindung potenziell auch auf einen gemeinsamen physikalischen Speicher zurückgreifen bzw. physikalisch mittels derselben Digitalschaltung betrieben werden.

Als definierte Eigenschaft, auf die das Auswertungs-Signal beim Umschalten hin geprüft wird, kommen im Rahmen der Erfindung prinzipiell mehrere Eigenschaften infrage: Diesbezüglich kann die Diagnose-Einheit beispielsweise ausgelegt sein, um als definierte Eigenschaft des Auswertungs-Signals eine Flankensteilheit, eine Signalamplitude und/oder eine korrespondierende Signal-Laufzeit eines der Signalmaxima zu vergleichen.

Sofern das Füllstandsmessgerät auf dem TDR-Prinzip basiert und die Übertragungs-Einheit dementsprechend als elektrisch leitfähige Messsonde ausgelegt ist, die sich im eingebauten Zustand des Füllstandsmessgerätes in etwa senkrecht gen Behälterboden erstreckt, bietet sich außerdem die vorteilhafte Möglichkeit, dass eine der zwei Hochfrequenz-Quellen invertierend ausgelegt ist, und/oder dass einer der zwei Empfänger invertierend ausgelegt ist. Hierdurch ändert sich bei funktionsfähiger Hochfrequenz-Einheit die Polarität des Auswertungs-Signals, sofern die jeweils aktive Komponente umgeschaltet wird. Hierdurch werden die Strahlungs-Emissionen des Füllstandsmessgerätes verringert, wie es beispielsweise in der Veröffentlichungsschrift WO2005/062002 A1 beschrieben ist. In diesem Fall ist die Auswertungs-Einheit so vorzugsweise auszulegen, dass sie die Polarität des Auswertungs-Signals wieder invertiert, sofern sich die Polarität durch das Umschalten ändert, und dass sie die definierte Eigenschaft anhand des ggf. polaritätsmäßig zurück-invertierten Auswertungs-Signals ermittelt.

Des Weiteren kann die invertierende Auslegung einer der Empfänger bzw. einer der Hochfrequenz-Quellen zur Überprüfung der Funktionsfähigkeit der Hochfrequenz-Einheit: Hierzu muss die Auswertungs-Einheit ausgelegt sein, um die Polarität des Auswertungs-Signals zu ermitteln. Zudem muss die Diagnose-Einheit konzipiert sein, um die Auswertungs-Einheit derart zu steuern, dass jeweils vor und nach dem Umschalten der aktiven Hochfrequenz-Quelle bzw. des aktiven Empfängers als definierte Eigenschaft des Auswertungs-Signals dessen Polarität ermittelt wird. Hierdurch kann die Diagnose-Einheit die Hochfrequenz-Einheit als funktionsuntüchtig einzustufen, sofern sich die Polarität des Auswertungs-Signals durch das Umschalten nicht ändert.

Prinzipiell ist es im Sinne der Erfindung nicht relevant, ob das Füllstandsmessgerät auf dem FMCW- oder dem Pulslaufzeit-Prinzip basiert. Im Falle des Pulslaufzeit-Prinzips können die Empfänger beispielsweise als Sampler ausgelegt werden. Zur Umsetzung des Pulslaufzeit-Prinzips ist außerdem die Steuer-Einheit entsprechend auszulegen, um die jeweils aktive Hochfrequenz-Quelle derart anzusteuern, dass das Hochfrequenz-Signal gemäß des Pulslaufzeit-Verfahrens pulsförmig erzeugt wird. Außerdem steuert die Auswertungs-Einheit im Falle des Pulslaufzeit-Verfahrens den jeweils aktiven Sampler derart an, dass das Empfangs-Signal gemäß des Pulslaufzeit-Verfahrens unterabgetastet wird, so dass das Auswertungs-Signal zeitdiskretisiert wird.

Die Hochfrequenz-Quelle kann sowohl im Fall von FMCW als auch beim Pulslaufzeit-Verfahren als Hochfrequenz-Oszillator ausgelegt sein, wobei dessen Frequenz zumindest im Falle von FMCW beispielsweise durch eine "*Phase Locked Loop (PLL)"* geregelt werden kann. Im Falle von TDR reicht es aus, die Hochfrequenz-Quelle als Kondensator auszulegen. Die Empfänger können im Falle des FMCW-Verfahrens beispielsweise als Mischer ausgelegt werden, um das eingehende Empfangs-Signal mit dem auszusendenden Hochfrequenz-Signal zu mischen und hierdurch korrespondierend zum Pulslaufzeit-Verfahren das zeitgedehnte Auswertungs-Signal zu erhalten.

Analog zum erfindungsgemäßen Füllstandsmessgerät wird die Aufgabe, die der Erfindung zugrunde liegt, außerdem durch ein entsprechendes Mess-Verfahren zur Überprüfung der Funktionsfähigkeit des Füllstandsmessgerätes gelöst. Dabei umfasst das Verfahren folgende Verfahrensschritte:
- Erzeugung des Hochfrequenz-Signals mittels der jeweils aktiv-geschalteten Hochfrequenz-Quelle,
- Senden des Hochfrequenz-Signals gen Füllgut und Empfang des entsprechenden Empfangssignals nach Reflektion an der Füllgut-Oberfläche,
- Empfang des Empfangs-Signals mittels des jeweils aktiv-geschalteten Empfängers, so dass ein zeitgedehntes Auswertungs-Signal generiert wird,
- Ermittlung der definierten Eigenschaft des Auswertungs-Signals,
- Passiv-Schalten der jeweils aktiven Hochfrequenz-Quelle, und umgekehrt, und/oder Passiv-Schalten des jeweils aktiven Empfängers, und umgekehrt.

Anschließend werden die vorhergien Verfahrensschritte - abgesehen vom Umschalten der aktiven Hochfrequenz-Quelle bzw. des aktiven Empfängers -wiederholt. Durch die Wiederholung der Verfahrensschritte kann abschließend
- die definierte Eigenschaft vor und nach dem Umschalten verglichen werden, und
- die Hochfrequenz-Einheit als funktionsuntüchtig eingestuft werden, sofern sich die definierte Eigenschaft des Auswertungs-Signals durch das Umschalten um einen definierten Mindestwert geändert hat.

Dabei kann das Verfahren beispielsweise automatisiert werden, indem das Umschalten der jeweils aktiven Hochfrequenz-Quelle bzw. des jeweils aktiven Empfängers, der Vergleich der definierten Eigenschaft vor und nach dem Umschalten und die Einstufung der Hochfrequenz-Einheit hinsichtlich ihrer Funktionsuntüchtigkeit im Messbetrieb zyklisch durchgeführt werden.

Anhand der nachfolgenden Figuren wird die Erfindung näher erläutert. Es zeigt:
Fig. 1: Ein TDR-basiertes Füllstandsmessgerät nach dem Stand der Technik,
Fig. 2: eine schematische Darstellung eines Auswertungs-Signals,
Fig. 3: ein Blockschaltbild eines erfindungsgemäßen Füllstandsmessgerätes, und
Fig. 4: mögliche Auswirkungen einer fehlerhaften Hochfrequenz-Einheit auf die Auswertungs-Kurve.

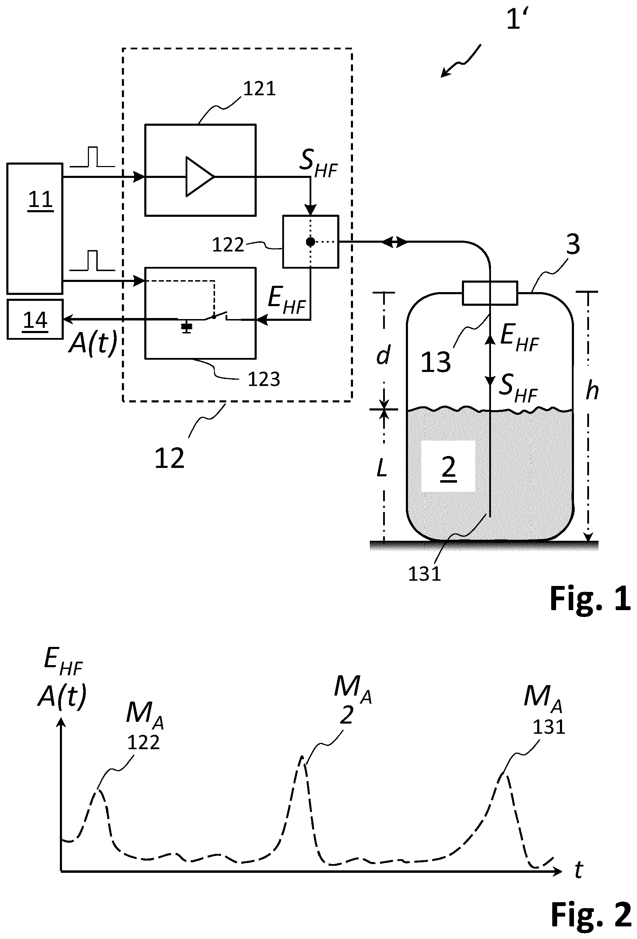

Zum grundsätzlichen Verständnis der Erfindung ist in Fig. 1 ein Blockschaltbild eines nach dem Stand der Technik aufgebauten Füllstandsmessgerätes 1' gezeigt, das zur Messung des Füllstandes L eines in einem Behälter 3 befindlichen Füllgutes 2 dient. Das dargestellte Füllstandsmessgerät 1' basiert auf dem Pulslaufzeit-Prinzip, wobei es gemäß des TDR-Verfahrens als Übertragungs-Einheit 13 eine Messsonde umfasst. Zur Bestimmung des Füllstandes L erstreckt sich die Messsonde 13 dementsprechend im Behälter-Inneren von der Oberseite bis kurz oberhalb des Behälterbodens. Dabei ist die Einbauhöhe h der Messsonde 13 oberhalb des Behälterbodens bekannt und in einer Auswertungs-Einheit 14 des Füllstandsmessgerätes 1' hinterlegt.

Gemäß des Pulslaufzeit-Verfahrens wird über die Messsonde 13 ein Hochfrequenz-Signal S_{HF} entsprechend pulsförmig in Richtung des Füllgutes 2 geleitet. Durch den dortigen Sprung des Dielektrizitätswertes wird das Hochfrequenz-Signal S_{HF} auf Höhe der Füllgut-Oberfläche 2 in der Messsonde 13 reflektiert und nach einer korrespondierenden Signallaufzeit t im Füllstandsmessgerät 1' entsprechend als Empfangs-Signal E_{HF} empfangen. Hierbei hängt die Signallaufzeit des Signals S_{HF}, E_{HF} vom Abstand d = h - L der Behälter-Oberseite zur Füllgut-Oberfläche ab.

Zur Erzeugung des Hochfrequenz-Signals S_{HF} umfasst das Füllstandsmessgerät 1' als Bestandteil einer Hochfrequenz-Einheit 12 eine erste Hochfrequenz-Quelle 121. Dabei kann die erste Hochfrequenz-Quelle 121 gemäß des TDR-Verfahrens beispielsweise als Kondensator ausgelegt sein, der zur Erzeugung des 100 ps bis ca. 1 ns dauernden Pulses entsprechend entladen wird. Im Falle von frei abstrahlendem Radar gemäß des Pulslaufzeit- oder FMCW-Verfahrens kann die erste Hochfrequenz-Quelle 121 beispielsweise als Frequenz-geregelter Hochfrequenz-Schwingkreis oder als Schwingquarz ausgelegt sein. Damit die erste Hochfrequenz-Quelle 121 das Hochfrequenz-Signal S_{HF} gemäß des TDR-Verfahrens in der erforderlichen Taktrate pulsförmig erzeugt, wird die erste Hochfrequenz-Quelle 121 von einer Steuer-Einheit 11 außerhalb der ersten Hochfrequenz-Einheit 12 entsprechend getaktet angesteuert. Dabei führt die erste Hochfrequenz-Quelle 121 das auszusendende Hochfrequenz-Signal S_{HF} der Messsonde 13 über eine Sende-/Empfangsweiche 122 zu. Dabei ist die Auslegung der Sende-/Empfangsweiche 122 prinzipiell nicht fest vorgegeben. Im Falle von TDR, wie es bei der in Fig. 1 gezeigten Ausführungsvariante der Fall ist, kann die Sende-/Empfangsweiche 122 beispielsweise als rein als elektrischer Knoten ausgelegt sein. Insbesondere im Fall von frei abstrahlendem Radar kann die Sende-/Empfangsweiche 122 beispielsweise als Duplexer realisiert werden.

Auch das von der Messsonde 13 in der Hochfrequenz-Einheit 12 eingehende Empfangs-Signal E_{HF} wird über die Sende-/Empfangsweiche 122 einem ersten Empfänger 123 zugeführt. Gemäß des Pulslaufzeit-Prinzips wird das Empfangs-Signal E_{HF} im ersten Empfänger 123 unterabgetastet, so dass ein Auswertungs-Signal A(t) erzeugt wird, welches das Empfangs-Signal E_{HF} um einen definierten Faktor zeitgedehnt abbildet. Dabei hängt der Zeitdehnungsfaktor von der Abtastrate ab. Die entsprechende Abtastrate muss zur Erzielung einer hinreichenden Zeitdehnung so gewählt sein, dass sie sich sich von der Taktrate der ausgehenden Signal-Pulse S_{HF} lediglich im Promillebereich unterscheidet. Dementsprechend wird die Abtastrate, mit welcher der erste Empfänger 123 das Empfangs-Signal E_{HF} abtastet, wiederum von der Steuer-Einheit 11, welche auch die Taktrate der ausgehenden Signal-Pulse S_{HF} vorgibt, am ersten Empfänger 123 eingestellt. Durch die Zeitdehnung wird die Bestimmung des Füllstandes L anhand des Empfangssignals E_{HF} aus schaltungstechnischer Sicht vereinfacht. Im Gegensatz zu der in Fig. 2 gezeigten Ausführungsvariante wird im Falle von frei abstrahlendem Radar zusätzlich zur Zeitdehnung das Empfangs-Signal E_{HF} im ersten Empfänger 123 gleichgereichtet, so dass das Auswertungs-Signal A(t) in Bezug zu einem festen Referenzpotential lediglich eine Polarität - plus oder minus - aufweist.

Zur Bestimmung des Füllstandes L übermittelt der erste Empfänger 123 das Auswertungs-Signal A(t) einer Auswertungs-Einheit 14. Sofern es sich bei dem ersten Empfänger 123 um einen digitalen Sampler handelt, geschieht dies bereits digitalisiert. Die Ermittlung des Füllstandes L mittels des Auswertungs-Signals A(t) durch die Auswertungs-Einheit 14 wird dabei anhand von Fig. 2 näher veranschaulicht:
Fig. 2 illustriert den zeitlichen Amplituden-Verlauf des Empfangs-Signals E_{HF} bzw. des zeitgedehnten Auswertungs-Signals A(t). Dabei verhält sich der Abstand d zwischen Behälter-Oberseite und der Füllgut-Oberfläche proportional zur Zeit-Achse des Auswertungs-Signals A(t) des bzw. Empfangs-Signals E_{HF}. Im Idealfall, also ohne jegliche äußere Störeinflüsse, umfasst das Empfangs-Signal E_{HF} drei Signalmaxima Mₐ. Das zeitlich erste Signalmaximum Mₐ ist der internen Reflektion des Hochfrequenz-Signals S_{HF} an der Sende-/Empfangs-Weiche 122 zuzuordnen. Das zeitlich gesehen zweite Signalmaximum Mₐ im Empfangs-Signal E_{HF} wird an der Oberfläche des Füllgutes 2 hervorgerufen, während das dritte Signalmaximum Mₐ durch das Sonden-Ende 131 der Messsonde 13 bedingt ist.

Unter Zuhilfenahme etwaiger Filter-Verfahren ist die Auswertungs-Einheit 14 in der Lage, die Signallaufzeit t_{M} desjenigen Signalmaximums Mₐ zu ermitteln, welches durch die Füllgut-Oberfläche hervorgerufen ist. Auf Basis entsprechender Kalibrationsdaten berechnet die Auswertungs-Einheit 14 aus dieser Signallaufzeit t_{M} den entsprechenden Abstand d, und durch den Zusammenhang L = h - d bzw. die bekannte Einbauhöhe h kann anhand des Abstandes d wiederum der Füllstand L ermittelt werden.

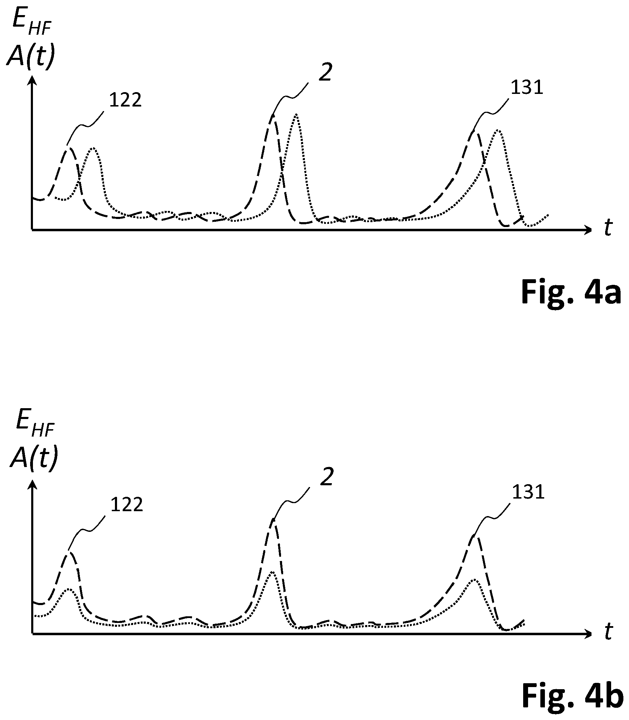

Eine zentrale Voraussetzung dafür, dass die Auswertungs-Einheit 14 den Füllstand L mit Sicherheit korrekt ermitteln kann, ist die fehlerfreie Funktionsweise der Hochfrequenz-Einheit 12, da diese je nach Beeinträchtigung nicht zu einem offensichtlichen Ausfall der Hochfrequenz-Einheit 12 führt. Wie in Fig. 4a dargestellt ist, kann eine funktionsunfähige Hochfrequenz-Einheit 12 beispielsweise mit zunehmender Einsatzzeit zu einem schleichenden Versatz des Empfangs-Signals E_{HF} bzw. einem Versatz des Auswertungs-Signals A(t) führen. Hierdurch wird ggf. unbemerkt die Signallaufzeit t_{M} des Füllstands-Maximums M_{A} und somit der ermittelte Abstandswert d verfälscht. Das Resultat einer schleichenden Degradierung eines Hochfrequenz-Verstärkers der Hochfrequenz-Einheit 12 ist wiederum in Fig. 4b illustriert: Durch solch einen Fehlermechanismus kann das Auswertungs-Signal S_{HF} bzw. das zugrundeliegende Empfangs-Signal E_{HF} in seiner Amplitude gedämpft werden, so dass die Auswertungs-Einheit 14 hierdurch im Zweifelsfall nicht das Signalmaximum M_{A}, das der Füllgut-Oberfläche zugrunde liegt, erkennt, sondern fälschlicherweise ein anderes Signalmaximum M_{A} zur Ermittlung des Abstandes d bzw. des Füllstandes L heranzieht. Auch eine solche Funktionsuntüchtigkeit der Hochfrequenz-Einheit 12 ist von außen nicht unmittelbar erkennbar. Jedoch auch ein plötzlicher Ausfall einer der Einheiten ist denkbar kann je nach Situation nicht erkannt werden. Somit kann das Füllstandsmessgerät 1' bei Anwendungen, zu denen entsprechende Sicherheitsanforderungen wie "*SIL*" einzuhalten sind, nicht eingesetzt werden.

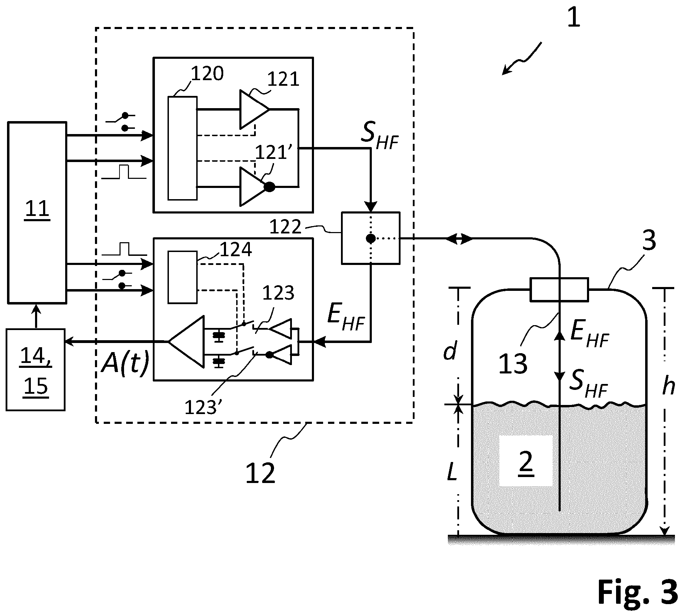

Eine mögliche Ausführungsform des erfindungsgemäßen Füllstandsmessgerätes 1, mit denen eine etwaige Funktionsuntüchtigkeit der Hochfrequenz-Einheit 12 diagnostiziert werden kann, ist daher in Fig. 3 näher beschrieben: Prinzipiell gleicht der Aufbau und die Funktionsweise des in Fig. 3 dargestellten Füllstandsmessgerätes 1 der in Fig. 1 gezeigten Ausführungsvariante. Zusätzlich umfasst die Hochfrequenz-Einheit 12 des erfindungsgemäßen Füllstandsmessgerätes 1 jedoch eine zweite Hochfrequenz-Quelle 121' und einen zweiten Empfänger 123', Dabei ist es vorteilhaft, wenn die zweite Hochfrequenz-Quelle 121' baugleich zur ersten Hochfrequenz-Quelle 121 ausgelegt ist, beispielsweise wiederum als Kondensator. Gleiches gilt für den zweiten Empfänger 123' in Bezug zum ersten Empfänger 123.

Im Falle von frei abstrahlendem Radar, also entgegen der in Fig. 3 gezeigten Ausführungsvariante ist es bezüglich der Hochfrequenz-Quellen 121, 121' vorteilhaft, wenn sie das Hochfrequenz-Signal S_{HF} mit derselben Frequenz erzeugen, um dasselbe Signalverhalten sicherzustellen.

Die Steuer-Einheit 11 kann mittels eines ersten Schalters 120 wahlweise eine der zwei Hochfrequenz-Quellen 121, 121' aktivieren. Mittels eines zweiten Schalters 124 kann die Steuer-Einheit 11 wiederum wahlweise einen der zwei Empfänger 123, 123' aktivieren. In diesem Zusammenhang können die Schalter 120, 124 beispielsweise als Transistoren ausgelegt werden, deren Gate/Basis durch die Steuer-Einheit 11 angesteuert werden.

In Bezug zu den Hochfrequenz-Quellen 121, 121' bezieht sich der Begriff "*Aktivieren*" auf das Anschalten der zu aktivierenden Hochfrequenz-Quelle 121, 121' sowie das Verbinden der zu aktivierenden Hochfrequenz-Quelle 121, 121' mit der Messsonde 13 bzw. mit der Sende-/Empfangsweiche 122. In Bezug zu dem Begriff "*Umschalten*" bedeutet dies, dass die inaktiv zu schaltende Hochfrequenz-Quelle121, 121' von der Messsonde 13 getrennt wird und/oder, dass sie ausgeschaltet wird. Hinsichtlich der zwei Empfänger 123, 123' bezieht sich der Begriff "*Aktivieren*" auf das Samplen des Empfangssignals E_{HF} und das übermitteln des entsprechenden Auswertungssignals A(t) an die Auswertungs-Einheit 14. Dies bedeutet in Zusammenhang mit dem Begriff "*Umschalten*" wiederum, dass der inaktiv zu schaltende Empfänger 123, 123' das Empfangssignal E_{HF} ab der Aktivierung des anderen Empfängers 123, 123' nicht mehr sampelt und/oder das Auswertungs-Signal A(t) nicht mehr an die Auswertungs-Einheit 14 übermittelt.

Auch im Falle der in Fig. 3 gezeigten Ausführungsvariante des erfindungsgemäßen Füllstandsmessgerätes 1 gibt die Steuer-Einheit 11 prinzipiell die Taktrate beider Hochfrequenz-Quellen 121, 121' vor. Gleiches gilt für die zwei Empfänger 123, 123', deren Abtastraten durch die Steuer-Einheit 11 vorgegeben wird.

Mittels der redundanten Auslegung der Hochfrequenz-Einheit 12 mit zwei Hochfrequenz-Quellen 121, 121' und zwei Empfängern 123, 123' ist es möglich, dass die Steuer-Einheit 14 während des Messbetriebs oder während eines Testbetriebs des Füllstandsmessgerätes 1 den ersten Schalter 120 oder den zweiten Schalter 124 beispielsweise zyklisch umschaltet. Dabei kann das Umschalten der zwei Schalter 120, 124 entweder gleichzeitig oder - ggf. zyklisch - versetzt zueinander erfolgen. Dabei wird jeweils vor und nach jedem Umschalten zumindest eine Auswertungs-Kurve A(t) aufgenommen, wobei die Auswertungs-Einheit 14 aus den zwei Auswertungskurven A(t) jeweils eine zuvor definierte Eigenschaft, wie deren Polarität, die Signal-Amplitude und/oder die korrespondierende Signal-Laufzeit t_{M} eines der Signalmaxima M_{A} bestimmt.

Koordiniert werden das Umschalten, das Aufnehmen der korrespondierenden Auswertungs-Kurven A(t) und das jeweilige Bestimmen der definierten Eigenschaft vor und nach dem Umschalten durch eine entsprechend ausgelegte Diagnose-Einheit 15 außerhalb der Hochfrequenz-Einheit 12. Außerdem vergleicht die Diagnose-Einheit 15 die definierte Eigenschaft vor dem Umschalten mit der entsprechenden Größe nach dem Umschalten. Sollte sich die Eigenschaft über einen Grenzwert hinaus ändern, so stuft die Diagnose-Einheit 15 die Hochfrequenz-Einheit 12 als funktionsuntüchtig ein und gibt gegebenenfalls ein entsprechendes Fehlersignal aus. Sofern es sich bei der definierten Eigenschaft um die Signal-Amplitude eines der Signalmaxima M_{A} handelt, so kann eine etwaige Abnahme der Amplitude durch das Umschalten über den Grenzwert hinaus beispielsweise als schleichende Degradierung einer Hochfrequenz-Verstärker der Hochfrequenz-Einheit 12 interpretiert werden, wie es in Fig. 4b dargestellt ist.

Bei dem in Fig. 3 gezeigten Ausführungsbeispiel des erfindungsgemäßen Füllstandsmessgerätes 1 sind die zweite Hochfrequenz-Quelle 121' und der zweite Empfänger 123' invertierend ausgelegt. Da das Füllstandsmessgerät 1 auf dem TDR-Verfahren basiert, bietet sich hierdurch die Möglichkeit, bei Umschalten des aktiven Empfängers 123, 123', ohne den die aktive Hochfrequenz-Quelle 121, 121' umzuschalten,- oder umgekehrt - die Polarität des Empfangs-Signals E_{HF} bzw. des Auswertungs-Signals A(t) zu invertieren. Dies reduziert nicht nur die Emissionen des Füllstandsmessgerätes 1, sondern es kann wiederum genutzt werden, um die Funktionsfähigkeit der Hochfrequenz-Einheit 12 zu überprüfen: Sofern die Diagnose-Einheit 15 trotz des Umschaltens von entweder der aktiven Hochfrequenz-Quelle 121, 121' oder des aktiven Empfängers 123, 123' keine Polaritäts-Änderung feststellt, ist die Hochfrequenz-Einheit 12 als nicht funktionstüchtig einzustufen.

Es versteht sich von selbst, dass das Auswertungs-Signal A(t) vor und nach dem Umschalten durch die Diagnose-Einheit 15 prinzipiell nicht nur auf eine, sondern auch auf mehrere Eigenschaften hin geprüft werden kann, wobei die Diagnose-Einheit 15 die Hochfrequenz-Einheit 12 in diesem Fall bereits als funktionsuntüchtig einstuft, sofern sich eine der definierten Eigenschaften des Auswertungs-Signals A(t) durch das Umschalten mindestens um einen definierten Wert geändert hat.

Das in Fig. 3 gezeigte Ausführungsbeispiel des erfindungsgemäßen Füllstandsmessgerätes 1 basiert auf dem Pulslaufzeit-Prinzip und umfasst gemäß des TDR-Verfahrens als Übertragungs-Einheit eine Messsonde 13. Diesbezüglich sei angemerkt, dass die erfindungsgemäß redundante Auslegung der Hochfrequenz-Einheit 12 mit zwei Hochfrequenzquellen und zwei Empfängern, sowie die entsprechende Überprüfung der Funktionsfähigkeit prinzipiell auch im Falle von frei abstrahlendem Radar bzw. bei Implementierung des FMCW-Prinzips umgesetzt werden kann.

### Bezugszeichenliste

- 1 , 1': Füllstandsmessgerät
- 2: Füllgut
- 3: Behälter
- 11: Steuer-Einheit
- 12: Hochfrequenz-Einheit
- 13: Übertragungs-Einheit
- 14: Auswertungs-Einheit
- 120: Erster Schalter
- 121 ,121': Hochfrequenz-Quelle
- 122: Sende-/Empfangsweiche
- 123 ,123': Empfänger
- 124: Zweiter Schalter
- A(t): Auswertungs-Signal
- d: Abstand
- E_{HF}: Empfangs-Signal
- h: Einbauhöhe
- L: Füllstand
- Mₐ: Signalmaximum
- S_{HF}: Hochfrequenz-Signal
- t: Signallaufzeit

## Patentansprüche

1. **Radar-basiertes** Füllstandsmessgerät zur Messung eines Füllstandes (L) eines Füllgutes (2) in einem Behälter (3), umfassend:
- Eine elektrisch leitfähige Messsonde (13), die sich im eingebauten Zustand des Füllstandsmessgerätes (1) in etwa senkrecht gen Behälterboden erstreckt und mittels welcher Hochfrequenz-Signale (S_{HF}) gen Füllgut (2) sendbar und nach Reflektion an der Füllgut-Oberfläche als Empfangs-Signale (E_{HF}) empfangbar sind, **gekennzeichnet durch**
- Eine Hochfrequenz-Einheit (12), mit
∘ zwei aktivierbaren Hochfrequenz-Quellen (121, 121'), die jeweils ausgelegt sind, das Hochfrequenz-Signal (S_{HF}) zu erzeugen,
∘ zwei aktivierbaren Empfängern (123, 123'), mittels denen das Empfangs-Signal (E_{HF}) jeweils zeitdehnbar ist,
∘ wobei eine der zwei Hochfrequenz-Quellen (121, 121') invertierend ausgelegt ist, und/oder wobei einer der zwei Empfänger (123, 123') invertierend ausgelegt ist,
- eine Steuer-Einheit (11), die ausgelegt ist,
∘ jeweils eine der Hochfrequenz-Quellen (121, 121') derart aktiv zu schalten, dass die aktivierte Hochfrequenz-Quelle (121, 121') das Hochfrequenz-Signal (S_{HF}) erzeugt, und
∘ jeweils einen der Empfänger (123, 123') derart aktiv zu schalten, dass der aktivierte Empfänger (123, 123') das Empfangs-Signal (E_{HF}) in ein zeitgedehntes Auswertungs-Signal (A(t)) umwandelt,
- eine Auswertungs-Einheit (14), die ausgelegt ist, um
∘ anhand des Auswertungs-Signals (A(t)) eine definierte Eigenschaft und eine Signal-Laufzeit (t_{M}) von zumindest einem Signalmaximum (M_{A}) zu ermitteln, und
∘ um anhand der Signal-Laufzeit (t_{M}) des Signalmaximums (Mₐ) den Füllstand (L) zu bestimmen, und
- eine Diagnose-Einheit (15), die ausgelegt ist, um
∘ die Steuer-Einheit (11) so zu steuern, dass die jeweils aktive Hochfrequenz-Quelle (121, 121') und/oder der jeweils aktive Empfänger (123, 123') inaktiv geschaltet werden/wird, und umgekehrt, um die Polarität des Empfangs-Signals (E_{HF}) bzw. des Auswertungs-Signals A(t) zu invertieren,
∘ die Auswertungs-Einheit (14) so zu steuern, dass die definierte Eigenschaft des Auswertungs-Signals (A(t)) jeweils vor und nach dem Umschalten zumindest ermittelt wird,
∘ um die Hochfrequenz-Einheit (12) als funktionsuntüchtig einzustufen, sofern sich die definierte Eigenschaft des Auswertungs-Signals (A(t)) durch das Umschalten mindestens um einen definierten Wert ändert.

2. Füllstandsmessgerät nach einem der vorhergehenden Ansprüche, wobei die Diagnose-Einheit (15) ausgelegt ist, als definierte Eigenschaft des Auswertungs-Signals (A(t)) eine Flankensteilheit, eine Signalamplitude und/oder eine korrespondierende Signal-Laufzeit (t_{M}) des zumindest einen Signalmaximums (M_{A}) zu vergleichen.

3. Füllstandsmessgerät nach Anspruch 1 oder 2, wobei die Auswertungs-Einheit (14) ausgelegt ist, um
∘ die Polarität des Auswertungs-Signals (A(t)) zu invertieren, sofern sich die Polarität durch das Umschalten ändert, und
∘ um die definierte Eigenschaft anhand des polaritätsmäßig invertierten Auswertungs-Signals (A(t)) zu ermitteln.

4. Füllstandsmessgerät nach Anspruch 1-3, wobei die Auswertungs-Einheit (14) ausgelegt ist, um die Polarität des Auswertungs-Signals (A(t)) zu ermitteln, wobei die Diagnose-Einheit (15) ausgelegt ist, um
∘ die Auswertungs-Einheit (14) derart zu steuern, dass jeweils vor und nach dem Umschalten der aktiven Hochfrequenz-Quelle (121, 121') bzw. des aktiven Empfängers (123, 123') als definierte Eigenschaft des Auswertungs-Signals (A(t)) dessen Polarität ermittelt wird, und um
∘ die Hochfrequenz-Einheit (12) als funktionsuntüchtig einzustufen, sofern sich die Polarität des Auswertungs-Signals (A(t)) durch das Umschalten nicht ändert, oder sofern sich die Polarität des Auswertungs-Signals (A(t)) durch das Umschalten ändert

5. Füllstandsmessgerät nach einem der vorhergehenden Ansprüche, wobei die Empfänger (123, 123') als Sampler ausgelegt sind, und
wobei die Steuer-Einheit (13) ausgelegt ist,
- die jeweils aktive Hochfrequenz-Quelle (121, 121') derart anzusteuern, dass das Hochfrequenz-Signal (S_{HF}) pulsförmig erzeugt wird, und
- den jeweils aktiven Sampler (123, 123') derart anzusteuern, dass das Empfangs-Signal (E_{HF}) gemäß des Pulslaufzeit-Verfahrens unterabgetastet wird, so dass das Auswertungs-Signal (A(t)) zeitdiskretisiert wird.

6. Füllstandsmessgerät nach zumindest einem der vorhergehenden Ansprüche, wobei die Diagnose-Einheit (15) ausgelegt ist, ein Fehlersignal zu generieren, sofern sie die Hochfrequenz-Einheit (12) als funktionsuntüchtig einstuft.

7. Verfahren zur Überprüfung der Funktionsfähigkeit des Füllstandsmessgerätes (1) nach einem der vorhergehenden Ansprüche, folgende Verfahrensschritte umfassend:
- Erzeugung des Hochfrequenz-Signals (S_{HF}) mittels der jeweils aktiv-geschalteten Hochfrequenz-Quelle (121, 121'),
- Senden des Hochfrequenz-Signals (S_{HF}) gen Füllgut (2) und Empfang des entsprechenden Empfangssignals (E_{HF}) nach Reflektion an der Füllgut-Oberfläche,
- Empfang des Empfangs-Signals (E_{HF}) mittels des jeweils aktiv-geschalteten Empfängers (123, 123'), so dass ein zeitgedehntes Auswertungs-Signal (A(t)) generiert wird,
- Ermittlung von zumindest einem Signalmaximum (M_{A}) des Auswertungs-Signals (A(t)),
- Ermittlung zumindest einer definierten Eigenschaft des zumindest einen Signalmaximums (M_{A}, M_{A}'),
- Passiv-Schalten der jeweils aktiven Hochfrequenz-Quelle (121, 121'), und umgekehrt, und/oder Passiv-Schalten des jeweils aktiven Empfängers (123, 123'), und umgekehrt, sowie anschließendes Wiederholen der vorhergien Verfahrensschritte,
- Vergleich der definierten Eigenschaft vor und nach dem Umschalten, und
- Einstufung der Hochfrequenz-Einheit (12) als funktionsuntüchtig, sofern sich die definierte Eigenschaft des Auswertungs-Signals (A(t)) durch das Umschalten mindestens um einen definierten Wert geändert hat.

8. Verfahren nach Anspruch 7, wobei
- das Umschalten der jeweils aktiven Hochfrequenz-Quelle (121, 121') bzw. des jeweils aktiven Empfängers (123, 123'),
- der Vergleich der definierten Eigenschaft vor und nach dem Umschalten, und
- die Einstufung der Hochfrequenz-Einheit (12) hinsichtlich ihrer Funktionsuntüchtigkeit
zyklisch durchgeführt werden.

## Claims

1. A radar-based fill level measuring device for measuring a fill level (L) of a filling material (2) in a container (3), comprising:
- An electrically conductive measurement probe (13), which extends roughly perpendicular toward the base of the container when the fill level measuring device (1) is installed and which can be used to transmit high-frequency signals (S_{HF}) toward the filling material (2) and can then, following reflection on the surface of the filling material, be used to receive these as receive signals (E_{HF}), **characterized by**
- a high-frequency unit (12), with
o two activatable high-frequency sources (121, 121'), each of which is configured to generate the high-frequency signal (S_{HF}),
∘ two activatable receivers (123, 123'), each of which can be used to time-dilate the receive signal (E_{HF}),
∘ wherein one of the two high-frequency sources (121, 121') is configured to be inverting, and/or wherein one of the two receivers (123, 123') is configured to be inverting,
- a control unit (11), which is configured
∘ to activate one of the high-frequency sources (121, 121') in each case in such a way that the activated high-frequency source (121, 121') generates the high-frequency signal (S_{HF}), and
∘ to activate one of the receivers (123, 123') in each case in such a way that the activated receiver (123, 123') converts the receive signal (E_{HF}) into a time-dilated evaluation signal (A(t)),
- an evaluation unit (14) which is configured
o to determine a defined property and a signal duration (t_{M}) of at least one signal maximum (M_{A}) based on the evaluation signal (A(t)), and
∘ to determine the fill level (L) based on the signal duration (t_{M}) of the signal maximum (Mₐ), and
- a diagnostics unit (15) which is configured
o to control the control unit (11) in such a way that the high-frequency source (121, 121') which is active in each case and/or the receiver (123, 123') which is active in each case is/are deactivated in order to invert the polarity of the receive signal (E_{HF}) and/or the evaluation signal,
∘ to control the evaluation unit (14) in such a way that the defined property of the evaluation signal (A(t)) is at least determined both before and after switching
∘ in order to classify the high-frequency unit (12) as non-functional if the defined property of the evaluation signal (A(t)) changes at least by a defined value due to switching.

2. The fill level measuring device as claimed in one of the preceding claims, wherein the diagnostics unit (15) is configured to compare an edge steepness, a signal amplitude, and/or a corresponding signal duration (t_{M}) of the at least one signal maximum (M_{A}) as a defined property of the evaluation signal (A(t)).

3. The fill level measuring device as claimed in claim 1 or 2, wherein the evaluation unit (14) is configured
∘ to invert the polarity of the evaluation signal (A(t)) if the polarity changes due to switching, and
∘ to determine the defined property based on the evaluation signal (A(t)) with the inverted polarity.

4. The fill level measuring device as claimed in claims 1 to 3, wherein the evaluation unit (14) is configured to determine the polarity of the evaluation signal (A(t)), wherein the diagnostics unit (15) is configured
∘ to control the evaluation unit (14) in such a way that the polarity of the evaluation signal (A(t)) is determined as its defined property both before and after switching the active high-frequency source (121, 121') and/or the active receiver (123, 123'), and
∘ to classify the high-frequency unit (12) as non-functional if the polarity of the evaluation signal (A(t)) does not change due to switching, or if the polarity of the evaluation signal (A(t)) changes due to switching.

5. The fill level measuring device as claimed in one of the preceding claims, wherein the receivers (123, 123') are configured as samplers, and wherein the control unit (13) is configured
- to actuate the high-frequency source (121, 121') which is active in each case in such a way that the high-frequency signal (S_{HF}) is generated in the form of pulses, and
- to actuate the sampler (123, 123') which is active in each case in such a way that the receive signal (E_{HF}) is subsampled according to the time-of-flight method in such a way that time discretization is carried out on the evaluation signal (A(t)).

6. The fill level measuring device as claimed in at least one of the preceding claims, wherein the diagnostics unit (15) is configured to generate a fault signal if it classifies the high-frequency unit (12) as non-functional.

7. A method for checking the functionality of the fill level measuring device (1) as claimed in one of the preceding claims, comprising the following process steps:
- Generating the high-frequency signal (S_{HF}) using the high-frequency source (121, 121') which has been activated in each case,
- transmitting the high-frequency signal (S_{HF}) toward the filling material (2) and receiving the corresponding received signal (E_{HF}) following reflection on the surface of the filling material,
- receiving the receive signal (E_{HF}) using the receiver (123, 123') which has been activated in each case in such a way that a time-dilated evaluation signal (A(t)) is generated,
- determining at least one signal maximum (M_{A}) of the evaluation signal (A(t)),
- determining at least one defined property of the at least one signal maximum (M_{A}, M_{A}'),
- switching the high-frequency source (121, 121') which is active in each case to passive, and vice versa, and/or switching the receiver (123, 123') which is active in each case to passive, and vice versa, and then repeating the previous process steps,
- comparing the defined property before and after switching, and
- classifying the high-frequency unit (12) as non-functional if the defined property of the evaluation signal (A(t)) has changed at least by a defined value due to switching.

8. The method as claimed in claim 7, wherein
- the switching of the high-frequency source (121, 121') which is active in each case and/or the receiver (123, 123') which is active in each case,
- the comparison of the defined property before and after switching, and
- the classification of the high-frequency unit (12) regarding its functionality are carried out cyclically.

## Revendications

1. Transmetteur de niveau radar destiné à la mesure d'un niveau (L) d'un produit (2) dans un réservoir (3), lequel transmetteur comprend :
- une sonde de mesure électriquement conductrice (13) qui, à l'état monté du transmetteur de niveau (1), s'étend à peu près verticalement vers le fond du réservoir, et sonde au moyen de laquelle des signaux haute fréquence (S_{HF}) peuvent être émis vers le produit (2) et, après réflexion sur la surface du produit, être reçus comme signaux de réception (E_{HF}),
**caractérisé en ce que**
- une unité haute fréquence (12), avec
∘ deux sources haute fréquence activables (121, 121'), lesquelles sont conçues respectivement pour générer le signal haute fréquence (S_{HF}),
∘ deux récepteurs activables (123, 123'), récepteurs au moyen desquels le signal de réception (E_{HF}) peut respectivement être dilaté dans le temps,
∘ l'une des deux sources haute fréquence (121, 121') étant conçue en mode inverseur, et/ou l'un des deux récepteurs (123, 123') étant conçu en mode inverseur,
- une unité de commande (11), laquelle est conçue
∘ pour commuter à l'état actif respectivement l'une des sources haute fréquence (121, 121'), de telle sorte que la source haute fréquence activée (121, 121') génère le signal haute fréquence (S_{HF}), et
∘ pour commuter à l'état actif respectivement l'un des récepteurs (123, 123'), de telle sorte que le récepteur activé (123, 123') convertit le signal de réception (E_{HF}) en un signal d'évaluation (A(t)) dilaté dans le temps,
- une unité d'évaluation (14), laquelle est conçue
∘ pour déterminer, à l'aide du signal d'évaluation (A(t)), une caractéristique définie et un temps de propagation de signal (t_{M}) d'au moins un maximum de signal (M_{A}), et
∘ pour déterminer le niveau (L) à l'aide du temps de propagation de signal (t_{M}) du maximum de signal (M_{A}), et
- une unité de diagnostic (15), laquelle est conçue
∘ pour commander l'unité de commande (11) de telle sorte que la source haute fréquence active (121, 121') respective et/ou le récepteur actif (123, 123') respectif sont/est commuté(s) à l'état inactif et inversement, afin d'inverser la polarité du signal de réception (E_{HF}) ou du signal d'évaluation (A(t)),
∘ pour commander l'unité d'évaluation (14) de telle sorte que la caractéristique définie du signal d'évaluation (A(t)) est au moins déterminée respectivement avant et après la commutation,
∘ pour considérer l'unité haute fréquence (12) comme inopérante dans la mesure où la caractéristique définie du signal d'évaluation (A(t)) se modifie d'au moins une valeur définie par la commutation.

2. Transmetteur de niveau selon la revendication précédente, pour lequel l'unité de diagnostic (15) est conçue pour comparer, en tant que caractéristique définie du signal d'évaluation (A(t)), une pente de front, une amplitude de signal et/ou un temps de propagation de signal correspondant (t_{M}) de l'au moins un maximum de signal (M_{A}).

3. Transmetteur de niveau selon la revendication 1 ou 2, pour lequel l'unité d'évaluation (14) est conçue
∘ pour inverser la polarité du signal d'évaluation (A(t)), dans la mesure où la polarité est modifiée par la commutation, et
∘ pour déterminer la caractéristique définie à l'aide du signal d'évaluation (A(t)) dont la polarité est inversée.

4. Transmetteur de niveau selon les revendications 1 à 3, pour lequel l'unité d'évaluation (14) est conçue pour déterminer la polarité du signal d'évaluation (A(t)), l'unité de diagnostic (15) étant conçue
∘ pour commander l'unité d'évaluation (14) de telle sorte que respectivement avant et après la commutation de la source haute fréquence active (121, 121') ou du récepteur actif (123, 123'), la polarité du signal d'évaluation (A(t)) est déterminée en tant que caractéristique définie du signal d'évaluation (A(t)), et
∘ pour considérer l'unité haute fréquence (12) comme inopérante dans la mesure où la polarité du signal d'évaluation (A(t)) ne change pas par la commutation, ou dans la mesure où la polarité du signal d'évaluation (A(t)) change par la commutation.

5. Transmetteur de niveau selon l'une des revendications précédentes,
pour lequel les récepteurs (123, 123') sont conçus comme des échantillonneurs, et
pour lequel l'unité de commande (13) est conçue
- pour commander la source haute fréquence active (121, 121') respective de telle sorte que le signal haute fréquence (S_{HF}) est généré sous forme d'impulsions, et
- pour commander l'échantillonneur actif (123, 123') respectif de telle sorte que le signal de réception (E_{HF}) est sous-échantillonné selon le procédé de temps de propagation des impulsions, de sorte que le signal d'évaluation (A(t)) est discrétisé dans le temps.

6. Transmetteur de niveau selon au moins l'une des revendications précédentes, pour lequel l'unité de diagnostic (15) est conçue pour générer un signal d'erreur dans la mesure où elle considère que l'unité haute fréquence (12) n'est pas en mesure de fonctionner.

7. Procédé destiné à la vérification de la capacité de fonctionnement du transmetteur de niveau (1) selon l'une des revendications précédentes, lequel procédé comprend les étapes suivantes :
- Génération du signal haute fréquence (S_{HF}) au moyen de la source haute fréquence (121, 121') respectivement commutée à l'état actif,
- Émission du signal haute fréquence (S_{HF}) vers le produit (2) et réception du signal de réception correspondant (E_{HF}) après réflexion sur la surface du produit,
- Réception du signal de réception (E_{HF}) au moyen du récepteur (123, 123') respectivement commuté à l'état actif, de sorte qu'un signal d'évaluation (A(t)) dilaté dans le temps est généré,
- Détermination d'au moins un maximum de signal (M_{A}) du signal d'évaluation (A(t)),
- Détermination d'au moins une caractéristique définie de l'au moins un maximum de signal (M_{A}, M_{A}'),
- Commutation à l'état passif de la source haute fréquence active (121, 121') respective et inversement, et/ou commutation à l'état passif du récepteur actif (123, 123') respectif et inversement, ainsi que répétition consécutive des étapes de procédé précédentes,
- Comparaison de la caractéristique définie avant et après la commutation, et
- Classement de l'unité haute fréquence (12) comme inopérante, dans la mesure où la caractéristique définie du signal d'évaluation (A(t)) s'est modifiée d'au moins une valeur définie par la commutation.

8. Procédé selon la revendication 7, pour lequel
- la commutation de la source haute fréquence active (121, 121') respective ou du récepteur actif (123, 123') respectif,
- la comparaison de la caractéristique définie avant et après la commutation, et
- la classification de l'unité haute fréquence (12) en ce qui concerne son incapacité de fonctionnement
sont effectuées de manière cyclique.
